# EUROPEAN PATENT APPLICATION

(11) **EP 4 223 570 A1**
(43) Date of publication of application: **09.08.2023**
(21) Application number: 22154860.5
(22) Date of filing: 02.02.2022
(51) Int. Cl.: B60K 11/04, F28F 19/00

(54) **A PROTECTIVE DEVICE**

(71) Applicant: Valeo Autosystemy SP. Z.O.O., 32-050 Skawina (PL)
(72) Inventor: PAWLAK, Damian, 32 050 Skawina (PL); MORYC, Mateusz, 32 050 Skawina (PL); GODZINA, Radoslaw, 32 050 Skawina (PL); MIELNICZUK, Mateusz, 32 050 Skawina (PL); PIETRZAK, Lukasz, 32 050 Skawina (PL)
(74) Representative: Valeo Systèmes Thermiques

(57) **Abstract**

The object of the invention is, among others, protective device (1) for a heat exchanger (100), said heat exchanger (100) comprising at least one front face (110) and one rear face (120) opposite each other, as well as a first side face (130) and a second side face (140) opposite each other, said protective device (1) comprising a protective grid and being intended to be placed opposite the front face (110) of the said heat exchanger (100), the protective grid comprising, on two opposite ends, first holding means (11) configured to engage with the first side face (130), wherein the first holding means (11) comprise at least one section of increased flexibility to enable bending thereof, and second holding means (12) configured to engage with the second side face (140), characterized in that the first holding means (11) comprise a first position (K1) enabled when the second holding means (12) are disengaged from the second side face (140), and a second position (K2) enabled when the second holding means (12) are engaged with the second side face (140).

## Description

### FIELD OF THE INVENTION

The invention relates to a protective device. In particular, the invention relates to the protective device with a grid for a motor vehicle heat exchanger.

### BACKGROUND OF THE INVENTION

Heat exchangers interact with a fluid circulation loop in order to generate heat exchange between the outside air of the motor vehicle directed to pass through these heat exchangers and the fluid. It may be a coolant fluid, a refrigerant fluid or a gaseous fluid such as an intake air flow for an internal combustion engine.

These heat exchangers may consist of radiators, condensers or charge air coolers. In these heat exchangers, several tubes are stacked on top of each other with heat dissipating elements arranged in-between. The fluid circulates inside the tubes and participates in heat exchange with the outside air which passes through the dissipating elements of the heat exchanger.

These heat exchangers are conventionally arranged on the front face of motor vehicles in order to capture the outside air, ahead of the engine which is placed in the engine compartment of the motor vehicle.

The frontal position of these heat exchangers exposes the heat exchanger which is closest to the front face of the motor vehicle to the projection of debris or gravel which are on the road and which can damage or even pierce the tubes inside which the fluid circulates. More specifically, the tubes of the heat exchanger arranged closest to the front face of the motor vehicle are generally arranged transversally to the running direction of the motor vehicle in a flat and horizontal arrangement. As a result, the tubes of this heat exchanger located closest to the front face of the motor vehicle are exposed to the projections of debris or gravel at their edges facing the front face of the vehicle.

In order to protect these heat exchangers, it is known to place in front of them a protective grid capable of retaining the gravel or any other projectile and thus preventing shocks on the tubes of the heat exchangers. It is known for example to arrange a protective grid ahead of the heat exchanger(s) of the motor vehicle, by clipping this protective grid onto the heat exchanger.

However, additional elements such as protective grids may under specific circumstances apply shocks to the heat exchanger, for example upon being hit by debris, or during normal lifecycle operation. Consequently, instead of protecting the heat exchanger, they may actually be a source of damage themselves. Additionally, protective grids may produce noise when vibrating. Driving comfort of vehicle passengers as well as the rest of traffic participants is then lowered.

Solutions aiming to mitigate the above-mentioned drawbacks may consist of installing an additional layer of soft material between the grid and the heat exchanger. However, these and similar concepts add an unwanted weight and complexity to grid-heat exchanger assembly. Moreover, the soft materials such as foam may deteriorate over time. Further, most of solutions may be damaged during the service.

Thus, it is desirable to provide a protective means for the heat exchanger which would eliminate vibrations, would enable service without decreasing anti-vibration properties, which would be easy to produce and which would not require additional materials, such as foams, etc.

### SUMMARY OF THE INVENTION

The object of the invention is, among others, protective device for a heat exchanger, said heat exchanger comprising at least one front face and one rear face (opposite each other, as well as a first side face and a second side face (opposite each other, said protective device comprising a protective grid and being intended to be placed opposite the front face of the said heat exchanger, the protective grid comprising, on two opposite ends, first holding means configured to engage with the first side face, wherein the first holding means (11) comprise at least one section of increased flexibility to enable bending thereof, and second holding means configured to engage with the second side face, characterized in that the first holding means comprise a first position enabled when the second holding means are disengaged from the second side face, and a second position enabled when the second holding means are engaged with the second side face .

Advantageously, a relative distance between the first holding means (and the second holding means in the second position is greater than a relative distance between the first holding means and the second holding means in the in the first position, wherein the relative distances are measured in parallel with respect to opposite ends of the grid.

Advantageously, the first holding means overlap the first side face so that a pivot movement of the protection device relatively to the front face is enabled in the first position.

Advantageously, the first holding means and the second holding means straddle the heat exchanger when the second position is enabled.

Advantageously, the second holding means comprise a clip comprising substantially triangular portion configured to engage at least with a part of the second side face.

Advantageously, the first holding means comprise in a first position at least a first hook portion protruding in opposite direction with respect to the second holding means, a second hook portion protruding obliquely with respect to the first hook portion, and a third hook portion protruding substantially perpendicularly with respect to the second hook portion.

Advantageously, the second hook along with the third hook portion are configured to move with respect to the first hook portion in a direction opposite to the second holding means when the protective device changes form the first position to the second position or form the second position to the first position.

Advantageously, the first holding means further comprise a median portion located between the first hook portion and the second hook portion, the median section being configured to facilitate aligning the first hook portion and the second hook portion in oblique arrangement.

Advantageously, the median portion is a substantially V-shaped portion, while in the first position.

Advantageously, the median portion comprises at least partially recessed section configured to facilitate relative movement between the first hook portion and the second hook portion.

Advantageously, the median portion is a substantially C-shaped portion, while in the first position, wherein at least part of the C-shaped portion at least partially overlaps the first hook portion in a direction opposite to the second holding means, and at least part of the C-shaped portion at least partially overlaps the second hook portion.

Another object of the invention is the heat exchanger comprising at least one protective device according to any of the preceding claims.

Advantageously, the heat exchanger further comprises: a first manifold, a second manifold (102) being substantially parallel to the first manifold, a core comprising a plurality of tubes stacked between the manifolds to provide a fluidal communication between said manifolds, wherein said tubes are interlaced with plurality of fins.

Advantageously, the core further comprises at least one bypass tube located at a terminal end of the stack of tubes.

Advantageously, the core further comprises at least one end plate located at the terminal end of the stack of tubes.

### BRIEF DESCRITPTION OF DRAWINGS

Examples of the invention will be apparent from and described in detail with reference to the accompanying drawings, in which:
Fig. 1 shows a perspective view of a protective device and a heat exchanger in a pre-assembly mode.
Fig. 2 shows a side view of a protective device and a heat exchanger in a pre-assembly mode.
Fig. 3 shows a side view of a protective device and a heat exchanger in an assembled mode.
Fig. 4 shows a side view of the first holding means according to first example.
Fig. 5 shows a perspective view of the first holding means of Fig.4.
Fig. 6 shows a side view of the first holding means with a recessed section.
Fig. 7 shows a side view of the first holding means of Fig. 6.
Fig. 8 shows another side view of the first holding means with a recessed section..
Fig. 9 shows a side view of the first holding means of Fig. 8.
Fig. 10 shows a side view of the first holding means with a C-shaped portion.
Fig. 11 shows a side view of the first holding means of Fig. 10.
Fig. 12 shows cross-sectional view of the heat exchanger with a bypass tube, wherein the heat exchanger comprises the protection grid.

### DETAILED DESCRIPTION OF EMBODIMENTS

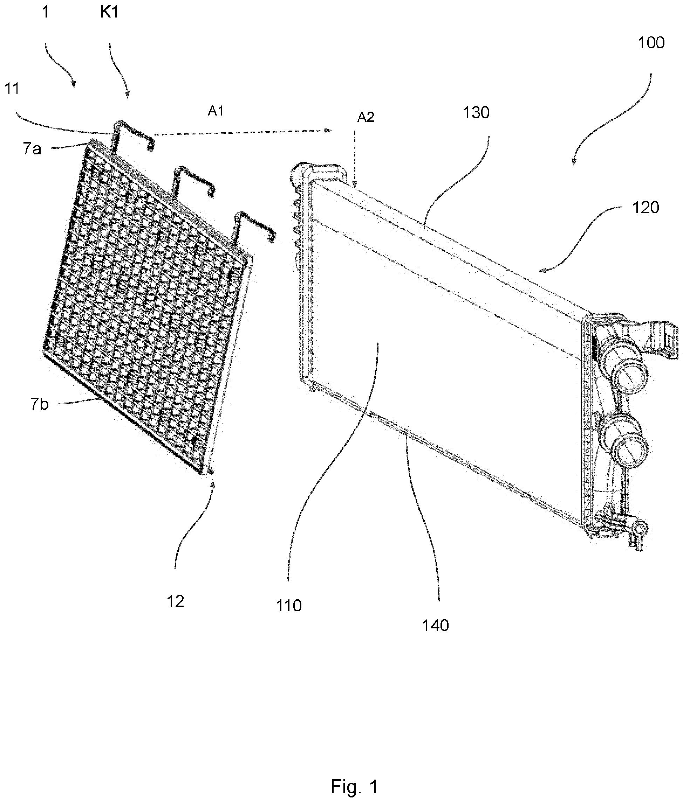

Fig. 1 shows a protection device 1 according to the invention. In particular, the invention relates to the protective device 1 for a heat exchanger 100.

The heat exchanger 100 may comprise at least one front face 110 and one rear face 120 opposite each other. As shown In Fig. 1 the first face 110 is a face located closer to the protection device 1, whereas the second face 120 is the face located further from the protection device. Further, the heat exchanger 100 may a first side face 130 and a second side face 140. The side faces 130, 140 may be arranged opposite each other. In other words, the first side face 130 may be regarded as top side of the heat exchanger 100, whereas the second side 140 may be regarded as the lover side of the heat exchanger 100, wherein the side faces 130, 140 may be substantially perpendicular with respect the first face 110 and/ or the second face 120.

Fig. 1 further shows the protective device 1 comprising a protective grid. The grid is configured to be arranged on a first side 110 of the heat exchanger 100, for example upstream the intended air flow direction, for example in front of the heat exchanger 100. The purpose of the grid is to protect the selected side of the heat exchanger 100, while at the same time obstructing the flow of the fluid to a minimum extent. Such grid can have slates arranged parallel to each other in one direction while maintaining a distance between them, and net supports arranged parallel to each other in perpendicular to the slates, while maintaining a distance between them, so that the slates are traversed by the net supports. Other shapes of the grid are also envisaged, as long as they allow the fluid to pass through the grid so that it can reach the face of the heat exchanger 100. Side walls of the slates may form a front face of the grid and the rear face of the grid.

Slates of the grid can be replaced by circular rods, square rods or other longitudinal elements, as long as they provide a resistant, physical barrier for debris of certain minimum dimensions and allow to arrange them in spaced manner for enabling fluid flow.

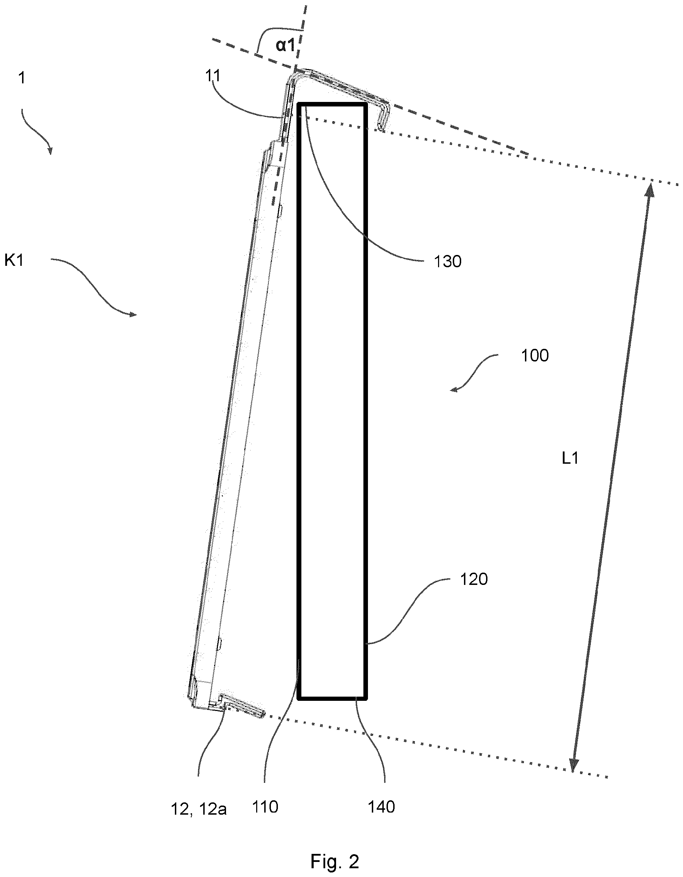

Figs 1 and 2 show two stages of protective device1 being prepared to be fixed to the heat exchanger 100. In Fig.1, the protective device is distanced from the heat exchanger 100, whereas in Fig.2 the protective device 1 is pre-attached to the heat exchanger 100. Referring to Fig.1, the protective device 1 may be inclined with respect to the heat exchanger 100. In other words, the general planes of the heat exchanger 100 and the protective device 1 may be initially inclined with respect to each other. Next, the protective device may be shifted towards the heat exchanger 100. This movement is depicted by a first arrow A1. Further, the protective device may be moved downwards, in parallel to the general plane of the heat exchanger 100, until a clear resistance is felt. This movement is depicted by a second arrow A2. Finally, the protective device 1 may be rotated, or in other words pivoted around the axis delimited by the first side face 130. The rotation of the protective device 1 is stopped when is totally fixed to the heat exchanger 100, so that the general planes of the heat exchanger 100 and the protective device 1 are substantially parallel with respect to each other. The protective device along with the grid are intended to be placed opposite the front face 110 of the heat exchanger 100.

It is to be noted, that one can distinguish at least two positions of the protective device 1 with respect to the heat exchanger 1. In a first position K1, the general plane of the protective device 1 is not parallel with respect to the general plane of the heat exchanger 100. In other words, the first position K1 is a pre-assembly mode of the protective device 1. In a second position K2, the general plane of the protective device 1 is substantially parallel with respect to the general plane of the heat exchanger 100. In other words, the protective device 1 is fixed to the heat exchanger 100 in the second position.

In order to provide a secure connection between the protective device 1 and the heat exchanger 100, the protective grid may comprise, on two opposite ends 7a, 7b, a first holding means 11 configured to engage with the first side face 130, and second holding means 12 configured to engage with the second side face 140 of the heat exchanger 100. The opposite ends 7a, 7b of the protective device 1 may be regarded as the outermost portions intended to be arranged in parallel with respect to the side faces 130, 140 of the heat exchanger 100. Naturally, the protective device 1 may also comprise lateral ends being substantially parallel to opposite ends 7a, 7b, yet they do not comprise reference numbers for the sake of clarity of the drawings. The first holding means may comprise at least one section of increased flexibility to enable bending thereof. The first holding means may be bent in a direction perpendicular to the opposite ends 7a, 7b, or perpendicularly with respect to the general direction of the portion of the protective device to which said first holding means 11 protrudes from.

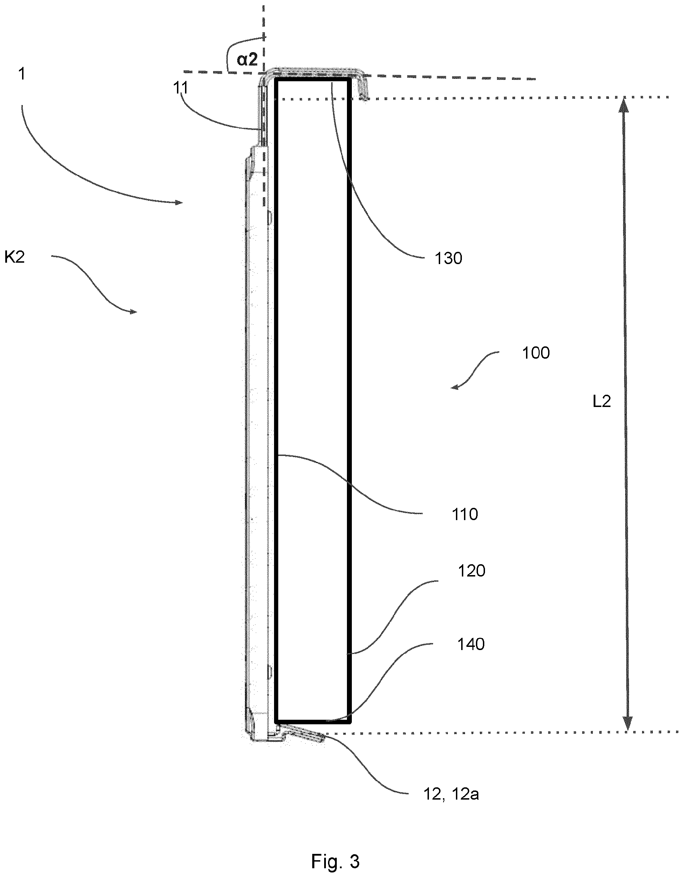

Figs 2 and 3, showing a side view of the protective device 1 and the heat exchanger 100 in a pre- assembly mode and fixed mode, respectively. Referring to Fig. 2, the first holding means 11 may comprise a first position K1 enabled when the second holding means 12 are disengaged from the second side face 140. In the first position K1, the first holding means 11 may comprise a first angular position α1 which may be regarded as a measure of the force generated by the first holding means 11 on the first side 130. Referring to Fig. 3 the second position K2 may be enabled when the second holding means 12 are engaged with the second side face 140. In the second position K2, the first holding means 11 may comprise a second angular position α2 which may be regarded as a measure of the force generated by the first holding means 11 on the first side 130. The second angular position α2 being greater than the first angular position α1 indicates that the protective device 1 is fixed to the heat exchanger 100, whereas the second angular position α2 being smaller than the first angular position α1 indicates that the protective device 1 is not fixed to the heat exchanger 100. The sub-components of the first holding means 11 which allow to describe the first angular position α1 and the second angular position α2 thereof are described in further paragraphs.

Alternatively, one can indicate a relative distance L2 between the first holding means 11 and the second holding means 12 in the first position K1 and the second position K2 of the protective device 1. The relative distance L1, L2 may be a distance from the terminal end of the second holding means 12 and the first holding means 11, whereas the distance L1, L2 is measured in parallel to the general plane of the protection device 1, as shown in Figs 2 and 3. Fig. 2 shows the protective grid 1 in the first position K1, so it comprises a first relative distance L1, whereas Fig. 3 shows the protective grid 1 in the second position K2, so it comprises the second relative distance L2.

If the relative distance L2 is greater than the relative distance L1 between the first holding means 11 and the second holding means 12, than the protective device is in the in the second position K1, wherein the relative distances L1, L2 are measured in parallel with respect to opposite ends of the grid.

If the relative distance L2 is smaller than the relative distance L1 between the first holding means 11 and the second holding means 12, than the protective device is in the in the first position K1, wherein the relative distances L1, L2 are measured in parallel with respect to opposite ends of the grid.

In order to facilitate the aforementioned pivot movement of the protective device 1 with respect to the heat exchanger 100, the first holding means 11 may overlap the first side face 130 so that a pivot movement of the protection device 1 relatively to the front face 110 is enabled in the first position K1. In other words, the first holding means 11 may hook onto the heat exchanger 100, in particular the first holding means 11 may hook onto the first side face 130 of the heat exchanger 100.

As shown in Fig. 3 the first holding means 11 and the second holding means 12 may straddle the heat exchanger 100 when the second position K2 is enabled. In other words, when the protective device 1 is fixed to the heat exchanger 100, the first holding means 11 and the second holding means may overlap the outline of the heat exchanger 100 delimited by the first side face 130 and the second side face 140.

As shown in Figs 1-3 and 12, the second holding means 12 may comprise a clip 12a, however other forms and shapes of the second holding means 12 are also envisaged. For example, the clip 12a may comprise substantially triangular portion configured to engage at least with a part of the second side face 140. The triangular portion allows the clip 12a gripping onto the second side face 140. The second holding means 12 may comprise a structure which has an unchanged form in the first position K1 as well as in the second position K2. In other words, the second holding means 12 enable fixing the protective grid 1 to the second side face 140 of the heat exchanger 100 without changing shape thereof.

As shown in Figs 1-12, the first holding means 11 may have a specific, hooked shape, yet other embodiments are also envisaged.

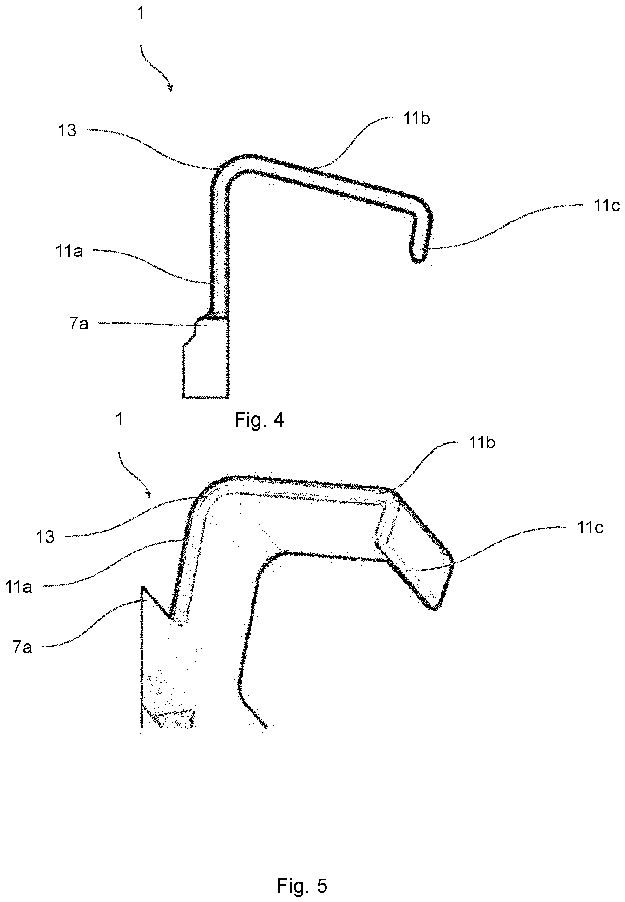

The exemplary variants of the first holding means 11 are shown in Figs 5-11 and discussed in further paragraphs. The holding means 11 are shown in Figs 5-11 are presented in first position K1, for the sake of clarity.

The first holding means 11 may comprise at least a first hook portion 11a protruding from one of the opposing ends of the protective device 1. The hook portion protrudes substantially in parallel with respect to the general plane of the protective device 1 so that it does not project beyond the side facing the first side 110 of the heat exchanger 110. The first hook portion 11a may also protrude in opposite direction with respect to the second holding means 12, i.e. opposite to the location of the second holding means on the other opposing end of the protective device 1.

Further, the first holding means may comprise a second hook portion 11b protruding obliquely with respect to the first hook portion 11a. Naturally, the second hook portion 11b protrudes towards the intentional location of the first side 110 of the heat exchanger 100, not in opposite direction. The term obliquely refers to an angle formed by neighboring first hook portion 11a and the second hook portion 11b. It is preferred that the angle is sharp, i.e. between 0 and 90 degrees measured between the first hook portion 11a and the second hook portion. In other words, the oblique arrangement of the first hook portion 11a and the second hook portion 11b may be determined by the first angular position α1 and the second angular position α2 from Figs 2 and 3. The arrangement of the first hook portion 11a and the second hook portion 11b is not limited to aforementioned values. Other arrangements which would allow to obtain the same or similar technical effect are also envisaged.

Further, the first holding means 11 may comprise a third hook portion 11c protruding substantially perpendicularly with respect to the second hook portion 11b. The third hook portion 11c prevents the first holding means 11 from slipping from the heat exchanger 100. The third hook portion 11c may actively take part during assembling the protective device 1 onto the heat exchanger 100. They allow immobilizing the protective device 1 in a direction perpendicular to the first side 110, whereas it projects substantially in parallel with respect to the second side 120 of the heat exchanger 100. Consequently, no other means of retaining are required and there is no risk that the first holding means 11 would damage the tubes or any other sub-component of the heat exchanger 100. Further, the first holding means 11 increase the serviceability of the heat exchanger- grid assembly, as the third hook portion 11c may be easily shifted away from the heat exchanger 100, allowing the protective device 1 to be removed from the heat exchanger 100.

The second hook portion 11b along with the third hook portion 11c are configured to move with respect to the first hook portion 11a in a direction opposite to the second holding means 12 when the protective device 1 changes form the first position K1 to the second position K2 or form the second position K2 to the first position K1. In other words, the second hook portion 11b along with the third hook portion 11c are configured to move with respect to the first hook portion 11a in a direction parallel to the main plane of the protective device 1. During the movement, the first hook portion 11a preferably remains in the same position. The movement of the second hook portion 11b is carried out mainly between the first position K1 and the second position of the first holding means 11, i.e. when the protective device 1 is stretched onto the heat exchanger 100. As the protective device 1 is stretched onto the heat exchanger 100, the first holding means 11 create a tension between these sub-components. This allows the first holding means 11 to act as a shock absorber as the second hook portion 11b may absorb energy coming from, for example, heat exchanger 100 vibrating on uneven surface or the turbulences coming from the ambient air.

The amount of force generated by the first holding means 11 onto the heat exchanger 100 may be optimized, according to the desired effect and shock-absorbing properties of the protective device 1.

Thus, the first holding means 11 may further comprise a median portion 13 located between the first hook portion 11a and the second hook portion 11b The median section 13 may also be configured to facilitate aligning the first hook portion 11a and the second hook portion 11b in oblique arrangement.

Referring to Figs 4 and 5, the entire first holding means 11 comprises the same thickness. In is to be noted that the thickness may be measured relatively to the orientation of each portion of the first holding means 11. In general, the thickness may be measured in the protective device 1 is seen from side, or from the side of the first holding means 11 as shown for example in Figs 4, 6, 8 ,10. The thickness itself is relative to each portion of the holding means 11 yet generally it may be measured as in a straight line between the walls forming each of the first hook portion 11a, the second hook portion 11b, the third hook portion 11c or the median section 13.

The median portion 13 may be a substantially V-shaped portion. The median portion 13 connects the first hook portion 11a and the second hook portion 11b and principally it is the median portion 13 that ensures the oblique configuration within the first holding means 11.

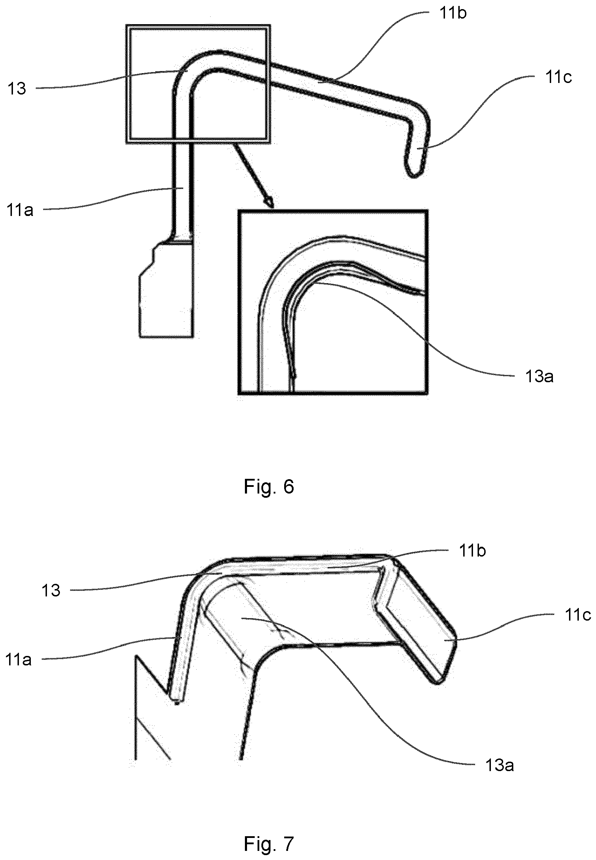

As shown in Figs 6 and 7, the median portion 13 may comprise at least partially recessed section 13a. The recessed section 13a facilitates relative movement between the first hook portion 11a and the second hook portion 11b, thus it allows to control how much force the first holding means 11 generate on the heat exchanger. If one requires more flexibility, the recessed section 13a may be carried out on an inner arch of the recessed section 13a, as shown in the figures.

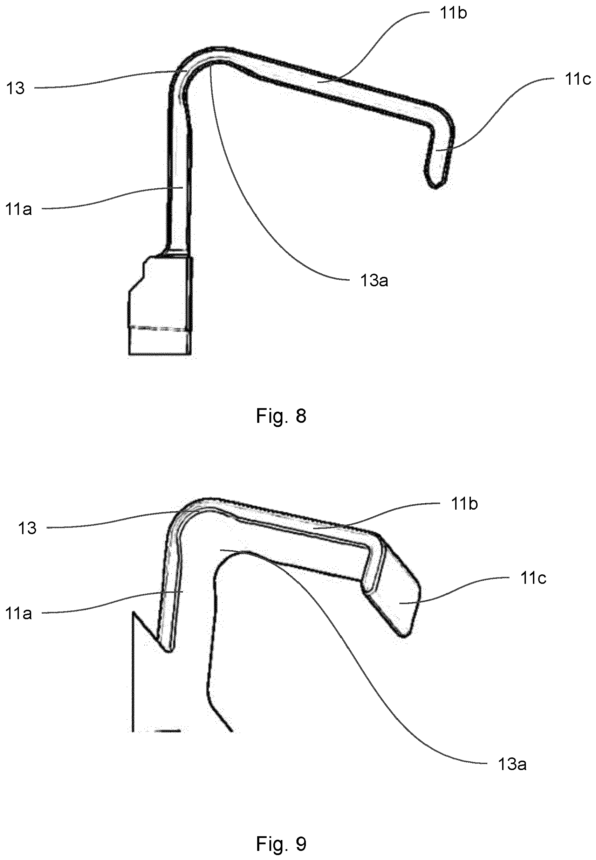

Alternatively, the recessed section may carried out through the entire median portion 13a, so that the thickness thereof is smaller than the thickness of the first hook portion 11a. This embodiment is shown in Figs 8 and 9.

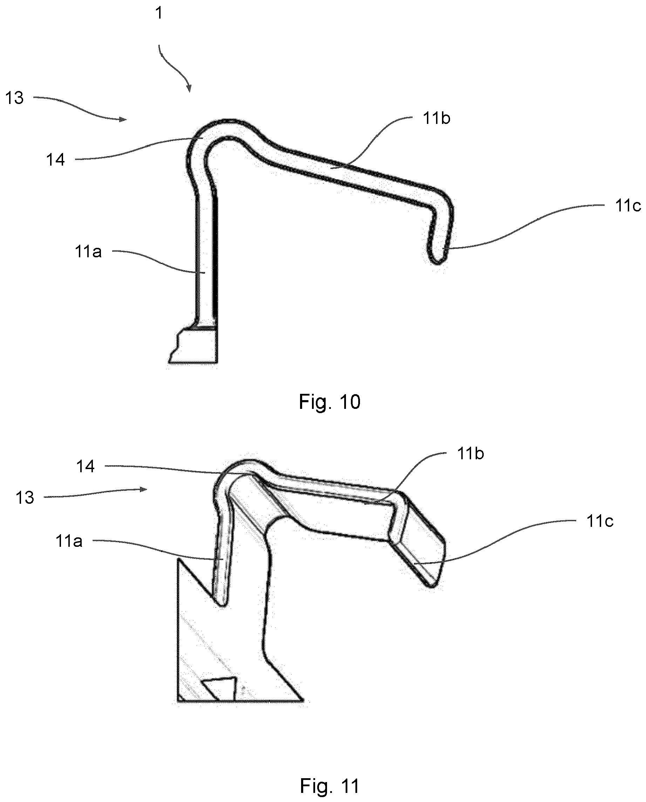

In yet different embodiment, the median portion 13 may be in a form of a substantially C-shaped portion 14, as shown in Figs 10 an 11. At least part of the C-shaped portion 14 may at least partially overlap the first hook portion 11a in a direction parallel to the general plane of the protective device 1, and at least part of the C-shaped portion 14 may at least partially overlap the second hook portion 11b. In other words, the median portion 13a in form of C-shaped portion 14 may have a chicaning shape, wherein the first bend is intended to protrude substantially outwardly from the heat exchanger 100, the second bend turns in opposite direction to the first bend, and the third ben turns in opposite direction to the second bend. This embodiment provides a best balance between flexible properties and rigidity of the first holding means 11.

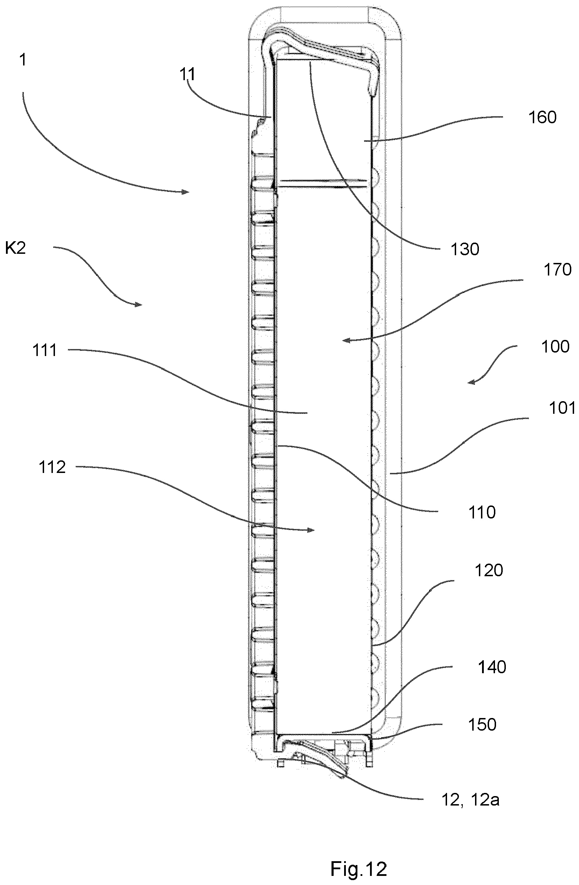

Another subject of the invention may be the heat exchanger 100 comprising at least one protective device 1 described above. Fig. 12 shows a cross- section view of such heat exchanger, thus all missing references will be indicated as not shown.

The heat exchanger 100 with the protective device 1 may further comprise: a first manifold 101, a second manifold 102 being substantially parallel to the first manifold 101, a core 110 comprising a plurality of tubes 111 stacked between the manifolds 101, 102 to provide a fluidal communication between said manifolds 101, 102, wherein said tubes 111 are interlaced with plurality of fins 112.

The heat exchanger 100 may further comprise at least one bypass tube 160 located at a terminal end of the stack of tubes 111. In this embodiment, the first holding means 11 are attached directly to the bypass tube 160.

Said core 110 may further comprise at least one end plate 150 located at the terminal end of the stack of tubes 111. It is apparent from Fig, 12 that the clip 12a of the second holding means 12 perfectly fits the end plate 150 to immobilize the protective device 1 with respect to the heat exchanger 100.

The protecting device 1 is configured to be aligned with the heat exchanger 100 so that the tubes 111 are protected by respective parts of the grid. In particular, the protecting device is aligned with the tubes 111 so that the air may flow in-between the tubes 111. The tubes 111 may be interlaced with the fins 112 to increase the surface capable to exchange the heat.

Other variations to the disclosed embodiments can be understood and effected by those skilled in the art in practicing the claimed invention, from a study of drawings, the disclosure, and the appended claims. The mere fact that certain measures are recited in mutually different dependent claims does not indicate that a combination of these measures cannot be used to the advantage.

## Claims

1. A protective device (1) comprising a protective grid for a heat exchanger (100), said heat exchanger (100) comprising at least one front face (110) and one rear face (120) opposite each other, as well as a first side face (130) and a second side face (140) opposite each other, said protective device (1) is intended to be placed opposite the front face (110) of the said heat exchanger (100), the protective grid comprising, on two opposite ends, first holding means (11) configured to engage with the first side face (130), wherein the first holding means (11) comprise at least one section of increased flexibility to enable bending thereof, and second holding means (12) configured to engage with the second side face (140), **characterized in that** the first holding means (11) comprise a first position (K1) enabled when the second holding means (12) are disengaged from the second side face (140), and a second position (K2) enabled when the second holding means (12) are engaged with the second side face (140).

2. The protective device (1) according to claim 1, wherein a relative distance (L2) between the first holding means (11) and the second holding means (12) in the second position (K2) is greater than a relative distance (L1) between the first holding means (11) and the second holding means (12) in the in the first position (K1), wherein the relative distances (L1, L2) are measured in parallel with respect to opposite ends of the grid.

3. The protective device (1) according to any of the preceding claims, wherein the first holding means (11) overlap the first side face (140) so that a pivot movement of the protection device (1) relatively to the front face (110) is enabled in the first position (K1).

4. The protective device (1) according to claims 1 and 2, wherein the first holding means (11) and the second holding means (12) straddle the heat exchanger (100) when the second position (K2) is enabled.

5. The protective device (1) according to any of the preceding claims, wherein the second holding means (12) comprise a clip (12a) comprising substantially triangular portion configured to engage at least with a part of the second side face (140).

6. The protective device (1) according to any of the preceding claims, wherein the first holding means (11) comprise in a first position (K1) at least a first hook portion (11a) protruding in opposite direction with respect to the second holding means (12), a second hook portion (11b) protruding obliquely with respect to the first hook portion (11a), and a third hook portion (11c) protruding substantially perpendicularly with respect to the second hook portion (11b).

7. The protective device (1) according to claim 6, wherein the second hook (11b) along with the third hook portion (11c) are configured to move with respect to the first hook portion (11a) in a direction opposite to the second holding means (12) when the protective device (1) changes form the first position (K1) to the second position (K2) or form the second position (K2) to the first position (K1).

8. The protective device (1) according to any of the preceding claims, wherein the first holding means further comprise a median portion (13) located between the first hook portion (11a) and the second hook portion (11b), the median section (13) being configured to facilitate aligning the first hook portion (11a) and the second hook portion (11b) in oblique arrangement.

9. The protective device (1) according to the preceding claim, wherein, the median portion (13) is a substantially V-shaped portion, while in the first position (K1).

10. The protective device (1) according to the preceding claim, wherein the median portion (13) comprises at least partially recessed section (13a) configured to facilitate relative movement between the first hook portion (11a) and the second hook portion (11b).

11. The protective device (1) according to claim 8, wherein, the median portion (13) is a substantially C-shaped portion (14), while in the first position (K1), wherein at least part of the C-shaped portion (14) at least partially overlaps the first hook portion (11a) in a direction opposite to the second holding means (12), and at least part of the C-shaped portion (14) at least partially overlaps the second hook portion (11b).

12. A heat exchanger (100) comprising at least one protective device (1) according to any of the preceding claims.

13. The heat exchanger (100) according to the preceding claim, wherein the heat exchanger (100) further comprises: a first manifold (101), a second manifold (102) being substantially parallel to the first manifold (101), a core (170) comprising a plurality of tubes (111) stacked between the manifolds (101, 102) to provide a fluidal communication between said manifolds (101, 102), wherein said tubes (111) are interlaced with plurality of fins (112).

14. The heat exchanger (100) according to claim 12, wherein the core (110) further comprises at least one bypass tube (160) located at a terminal end of the stack of tubes (111).

15. The heat exchanger according to any of claims 13 or 14, wherein the core (110) further comprises at least one end plate (150) located at the terminal end of the stack of tubes (111).
